# EUROPÄISCHE PATENTSCHRIFT

(11) **EP 0 311 761 B1**
(45) Veröffentlichungstag und Bekanntmachung des Hinweises auf die Patenterteilung: **09.06.1993**
(21) Anmeldenummer: 88112433.3
(22) Anmeldetag: 01.08.1988
(51) Int. Cl.: G01N 21/74, H05B 3/62

(54) **Rohrförmiger Ofen für die elektrothermische Atomisierung von Proben bei der Atomabsorptions - Spektroskopie**
Tubular furnace for the electrothermal atomization of samples in atomic absorption spectroscopy
Four tubulaire pour l'atomisation électrothermique des échantillons en spectroscopie d'absorption atomique

(30) Priorität: 16.10.1987 DE 3735013; 02.02.1988 DE 3802968
(43) Veröffentlichungstag der Anmeldung: 19.04.1989
(73) Patentinhaber: BODENSEEWERK PERKIN-ELMER GMBH, D-88662 Überlingen (DE)
(72) Erfinder: Schlemmer, Gerhard Christian Ulrich, D-7776 Owingen (DE); Tamm, Rolf, D-7777 Salem 2 (DE); Roedel, Günther, D-7776 Owingen (DE)
(74) Vertreter: Weisse, Jürgen, Dipl.-Phys. Patentanwalt

(56) Entgegenhaltungen:
- FR-A- 2 374 812
- GB-A- 2 181 235
- US-A- 4 022 530
- US-A- 4 407 582
- ANALYTIC CHEMISTRY, Band 58, Nr. 9, August 1986, Seiten 1973-1977, American Chemical Society; W. FRENCH et al.: "Spatially isothermal graphite furnace for atomic absorption spectrometry using side-heated cuvettes with integrated contacts"

## Beschreibung

### Technisches Gebiet

Die Erfindung betrifft einen rohrförmigen Ofen für die elektrothermische Erhitzung eines darin befindlichen Materials, enthaltend
(a) einen rohrförmigen Ofenkörper,
(b) an dem Ofenkörper auf gegenüberliegenden Längsseiten angebrachte Kontaktansätze,
(c) an den Kontaktansätzen angebrachte Kontaktflächen, über welche der Ofen zwischen geräteseitigen Kontakten gehalten wird,
(d) wobei die Kontaktansätze zwischen den Kontaktflächen und dem Ofenkörper Bereiche von vermindertem Durchtrittsquerschnitt für Wärme und elektrischen Strom aufweisen,
(e) die Bereiche von vermindertem Durchtrittsquerschnitt der Kontaktansätze von Einschnürungen gebildet sind, die sich im wesentlichen gleichmäßig längs des Ofenkörpers erstrecken, und
(f) Mittel zur Erzeugung einer den Ofebkörper umgebenden Schutzgasatmosphäre.

### Zugrundeliegender Stand der Technik

Ein rohrförmiger Ofen dieser Art (FR-A-2 374 812) aus Graphit zum Beispiel zum Spinnen von Glasfasern oder Zonenschmelzen von Halbleiterkristallen ist in einen Kühlmantel eingeschlossen, der mit Anschlußmitteln für die Durchleitung von Schutzgas versehen ist. Der Kühlmantel trägt Kühlwasseranschlüsse und ist an gegenüberliegenden Stirnseiten mit Deckeln versehen, die Anschlußklemmen tragen. Der rohrförmige Ofenkörper verläuft radial in dem Kühlmantel zwischen gegenüberliegenden Durchbrüchen und enthält an gegenüberliegenden Längsseiten Kontaktansätze mit Kontaktflächen, die mit den Anschlußklemmen verbunden sind. Die Kontaktansätze sind zwischen den Kontaktflächen und dem rohrförmigen Ofenkörper mit Einschnürungen versehen, die sich im wesentlichen gleichmäßig längs des Ofenkörpers erstrecken. Dadurch wird der Wärmeabfluß über die Kontaktansätze verringert und eine konstante Temperatur über die Länge des elektrischen Ofens erhalten.

Rohrförmige Öfen zur elektrothermischen Atomisierung bei der Atomabsorptions - Spektroskopie sind als "Graphitrohre" bekannt. Diese Graphitrohre werden mit ihren Stirnseiten zwischen ringförmigen Graphitkontakten gehalten, die federnd oder durch einen Stellmotor angedrückt werden. Die Graphitkontakte sitzen in Kühlmänteln. Eine zu atomisierende Probe wird durch eine seitliche Öffnung in das Graphitrohr eingebracht. Über die Graphitkontakte wird ein starker elektrischer Strom in Längsrichtung durch das Graphitrohr geleitet. Dadurch wird das Graphitrohr auf eine hohe Temperatur aufgeheizt. Die Probe wird dadurch atomisiert, so daß sich eine "Atomwolke" im Inneren des Graphitrohres bildet. Ein Meßlichtbündel von einer linienemittierenden Lichtquelle, das die Resonanzspektrallinien eines gesuchten Elements enthält, wird durch die ringförmigen Graphitkontakte und die Längsbohrung des Graphitrohres hindurchgeleitet. Aus der Absorption, welche das Meßlichtbündel dabei erfährt, kann die Menge des gesuchten Elements in der Probe bestimmt werden. Das Graphitrohr wird dabei von einem Schutzgas umströmt, so daß bei der Aufheizung kein Sauerstoff an das Graphitrohr gelangen kann.

Bei der Halterung des Graphitrohres an den Enden ergibt sich eine ungleichförmige Temperaturverteilung längs des Graphitrohres. Das Graphitrohr ist in der Mitte heißer als an den Enden, wo Wärme zu den gekühlten Kontakten abfließt.

Ein solcher bekannter Graphitofen (US-A-4 022 530) wird zwischen rohrförmigen Kontakten gehaltert, die das Graphitrohr bis auf eine Trennfuge mantelförmig auf seiner gesamten Länge zwischen den Kontaktflächen umgeben. Ein Schutzgasstrom durch Bohrungen in Kühlmänteln, welche die Kontakte umgeben, wird von beiden Enden her in das Graphitrohr eingeleitet. Dieser Schutzgasstrom tritt durch eine radiale Bohrung des Graphitrohres in der Mitte aus. Einer der rohrförmigen Kontakte weist ebenfalls eine radiale Bohrung auf, die mit der radialen Bohrung des Graphitrohres fluchtet. Mittel zur Erzeugung einer das Graphitrohr umgebenden Schutzgasatmosphäre werden von Schutzgaskanälen gebildet, die sich durch die rohrförmigen Kontakte erstrecken, zwischen denen der rohrförmigen Ofen an seinen Enden gehaltert ist.

Zur Erzielung einer günstigeren Temperaturverteilung längs des Graphitrohres ist es bekannt (US-A-4 407 582), den Heizstrom quer durch das Graphitrohr zu leiten. Zu diesem Zweck sind zwei Paare von miteinander verbundenen Kontakten in Form von gabelförmigen Kontaktstücken vorgesehen, die auf gegenüberliegenden Seiten radial an einem Graphitrohr anliegen. Der Heizstrom fließt daher im Bereich der Enden in Umfangsrichtung durch das Graphitrohr. Das Graphitrohr wird also im Bereich der Enden aufgeheizt. Die Wärme fließt von den Enden zur Mitte. Damit wird eine gleichmäßigere Temperaturverteilung erhalten.

Bei dieser bekannten Kontaktanordnung liegen die Kontakte an den heißen Stellen des Graphitrohres an. Dadurch ist die Kontaktierung schlecht reproduzierbar. Außerdem ist das Graphitrohr nur schwer mit einem Schutzgasstrom gegen den Zutritt von Sauerstoff abschirmbar. Das bedingt eine kurze Lebensdauer des Graphitrohres.

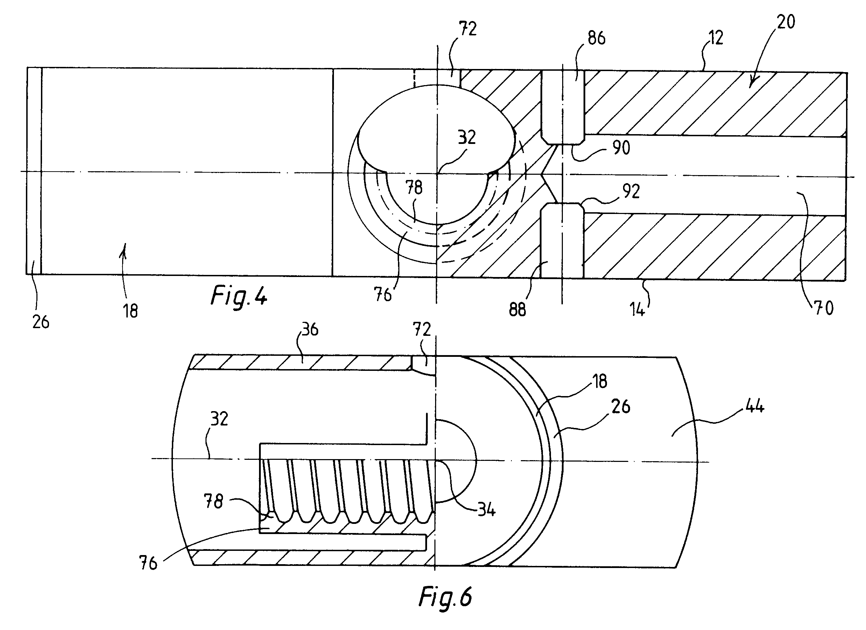

Durch die DE-A-3 534 417 und die Veröffentlichung von E. Frech et al. in "Analytical Chemistry" 58 (1986), Seite 1973 bis 1977, ist ein Ofen für die thermoelektrische Atomisierung bei der Atomabsorptions - Spektroskopie bekannt, bei welchem ein rohrartiger Ofenkörper von rechteckigem Querschnitt mit quer zur Ofenachse sich erstreckenden Kontaktansätzen als integraler Bauteil aus Graphit hergestellt ist. Die Kontaktierung erfolgt dann in einer kalten Zone an planen Kontaktflächen. Bei einigen Ausführungsbeispielen der DE-A-3 534 417 weisen die Kontaktansätze zwischen Kontaktflächen und Ofenkörper Bereiche von vermindertem Querschnitt auf. Bei einer Ausführungsform (Fig.3) sind Einschnitte vorgesehen, die sich längs des Ofenkörpers parallel zur Ofenachse erstrecken. Diese Schlitze dienen vor allem zur Verringerung des Wärmeflusses von dem Ofenkörper zu den Enden der Kontaktansätze. Außerdem sollen sie eine Anpassung des elektrischen Widerstandes an die Leistung der elektrischen Stromversorgung gestatten. Bei einer anderen Ausführungsform (Fig.4) der Druckschrift ist der Kontaktansatz mehrfach durchbrochen. Dadurch sollen vorgegebene Temperaturprofile erzeugt werden, indem Strom an bestimmten Stellen zugeführt wird und dort zur Erzeugung Joulscher Wärme in Umfangsrichtung durch den Ofenkörper strömt. Das ist ähnlich wie bei der oben schon diskutierten US-A-4 407 582, nur daß die Kontaktierung in kühlere Zonen verlegt ist.

Bei den bekannten Anordnungen erfolgt die Stromzufuhr längs des rohrförmigen Ofenkörpers ungleichförmig.

### Offenbarung der Erfindung

Der Erfindung liegt die Aufgabe zugrunde, einen rohrförmigen Ofen der eingangs genannten Art zu schaffen, der für die elektrothermische Atomisierung bei der Atomabsorptions-Spektroskopie geeignet ist und der bei möglichst gleichmäßiger Erwärmung die Inertgaszufuhr zum Schutz des rohrförmigen Ofens sicherstellt.Erfindungsgemäß wird diese Aufgabe dadurch gelöst, daß
(g) die Mittel zur Erzeugung der den Ofenkörper umgebenden Schutzgasatmosphäre quer zur Ofenachse verlaufende Bohrungen in den Kontaktansätzen enthalten, die sich im Bereich der Einschnürungen zum Ofenkörper hin öffnen und Schutzgaskanäle bilden.

Die quer zur Ofenachse verlaufenden und sich im Bereich der Einschnürungen zum Ofenkörper hin öffnenden Bohrungen bilden in den Kontaktansätzen Schutzgaskanäle, die im Betrieb des erfindungsgemäßen rohrförmigen Ofens von Inertgas durchsetzt werden, das den Ofen umspült und wirksam gegen Verbrennung schützt. Weiterhin erfolgt so über die Länge des Ofenkörpers hinweg eine im wesentlichen gleichmäßige Stromzufuhr zu dem Ofenkörper, so daß der Ofenkörper gleichmäßig erwärmt wird. Die Einschnürung des Kontaktansatzes wirkt einer Wärmeabfuhr entgegen. Einmal wird durch die Einschnürung der Durchtrittsquerschnitt für den Wärmestrom vermindert. Zum anderen wird aber auch in dem Bereich der Einschnürung eine erhöhte Joulesche Wärme erzeugt, die auf eine verminderte Masse wirkt, so daß die Einschnürung eine erhöhte Temperatur annimmt und auch aus diesem Grunde dem Abfluß von Wärme von dem Ofenkörper zu der Kontaktfläche vermindert. Es ergibt sich also eine sehr gleichmäßige Temperaturverteilung am Ofenkörper bei ziemlich kalten Kontaktflächen.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

### Kurze Beschreibung der Zeichnungen

- Fig.1: ist eine Ansicht eines rohrförmigen Ofens zur elektrothermischen Atomisierung von Proben bei der Atomabsorptions - Spektroskopie mit seitlichen Kontaktansätzen, in Richtung der Achse des Ofens gesehen.
- Fig.2: ist eine Draufsicht auf den rohrförmigen Ofen von Fig. 1 und die Kontaktansätze von oben in Fig.1 gesehen.
- Fig.3: ist ein Längsschnitt des rohrförmigen Ofens und eines mit diesem aus einem Stück bestehenden zylinderschalenförmigen Innenteils.
- Fig.4: ist eine Ansicht ähnlich Fig.1, teilweise im Schnitt, einer anderen Ausführung eines rohrförmigen Ofens zur elektrothermischen Atomisierung von Proben.
- Fig.5: ist eine Draufsicht des Ofens von Fig.4, ähnlich Fig.2 und teilweise im Schnitt.
- Fig.6: ist eine Seitenansicht des Ofens, von rechts in Fig.4 und 5 gesehen und teilweise im Schnitt.
- Fig.7: ist eine Ausführung des Ofens mit einer glattzylindrischen Innenfläche des Innenkörpers in einer Darstellung ähnlich Fig.6.
- Fig.8: zeigt eine weitere Ausführungsform eines Ofens für die elektrothermische Atomisierung von Proben.
- Fig.9: zeigt einen Schnitt senkrecht zur Ofenachse des Ofenkörpers von Fig.8.
- Fig.10: zeigt einen Längsschnitt des Ofens von Fig.8 und 9 längs der Ofenachse.

### Bevorzugte Ausführungen der Erfindung

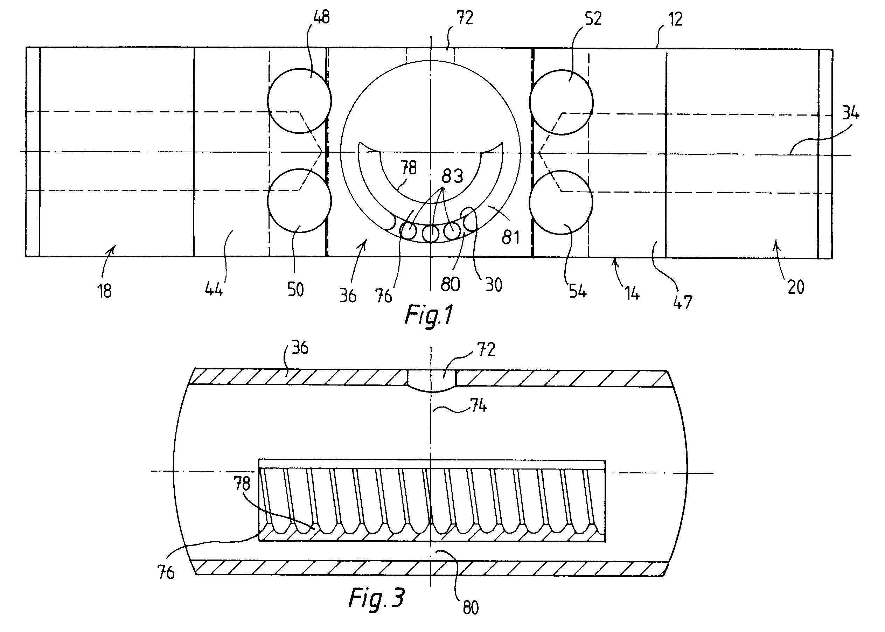

Bei dem Ofen von Fig.1 bis 3 ist mit 10 ein Graphitstück bezeichnet, das in seiner Grundform eine Platte mit einer oberen planen Fläche 12 und einer unteren planen Fläche 14 bildet. Das Graphitstück 10 weist einen Mittelteil 16 auf, der in Draufsicht im wesentlichen die Form eines regelmässigen Achtecks besitzt. An zwei diametral gegenüberliegenden Seiten dieses Achtecks sitzen Kontaktansätze 17,19, welche Kontaktstücke 18 und 20 bilden. Diese Kontaktstücke 18 und 20 haben zylindrische Mantelflächen 22 bzw. 24, sind aber oben und unten durch die planen Flächen 12 bzw. 14 begrenzt und dadurch abgeflacht. Die Kontaktstücke 18 und 20 haben konische Kontaktflächen 26 bzw. 28. Mit diesen Kontaktflächen 26 und 28 ist der Ofen zwischen geräteseitigen Kontakten gehalten, über welche die Stromzufuhr erfolgt.

Die zu Seiten mit den Kontaktstücken 18,20 senkrechten Seiten des Achtecks sind durch eine Bohrung 30 verbunden. Die Achse 32 der Bohrung 30 verläuft senkrecht zu der Achse 34 der Kontaktstücke. Die Bohrung 30 bildet den rohrförmigen Ofen. Der Teil des Mittelstücks 16 zwischen den durch die Bohrung 30 verbundenen Seiten bildet einen Ofenkörper 36.

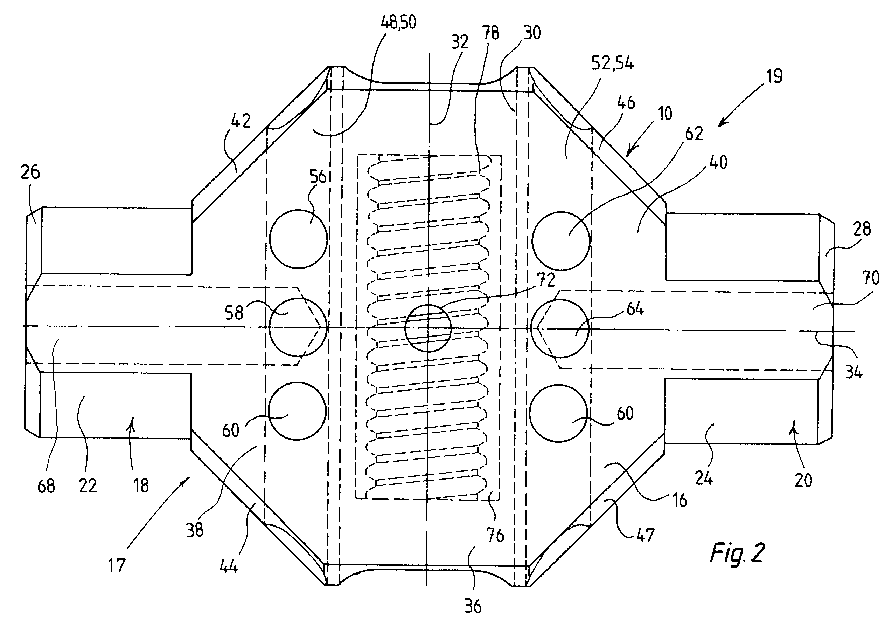

Die Kontaktansätze 17 und 19 enthalten zu beiden Seiten an den Ofenkörper 36 anschließende Kontaktrippen 38 und 40. Die Kontaktrippen 38 und 40 sind in der Draufsicht von Fig.2 trapezförmig. Die Kontaktrippen 38 und 40 sind oben und unten durch die planen Flächen 12 und 14 und an den Seiten durch schräg verlaufende Seitenflächen 42,44 bzw. 46,47 begrenzt. Die lange Parallelseite des Trapezes grenzt jeweils an den Ofenkörper 36 an. Die schmale Parallelseite des Trapezes ist jeweils die ersterwähnte Seite des Achtecks und trägt das Kontaktstück 18 bzw. 20. Die Kontaktrippen 38 und 40 weisen Bereiche von vermindertem Durchtrittsquerschnitt für den Wärmestrom von dem elektrisch beheizten Ofenkörper 36 zu den Kontaktflächen 26,28 und für den elektrischen Strom von den Kontaktflächen 26,28 zu dem Ofenkörper 36 auf.

Bei der Ausführung nach Fig.1 bis 3 sind zur Erzeugung dieser Bereiche von vermindertem Querschnitt in den schräg verlaufenden Seitenfächen 42,44 und 46,47 Paare von Bohrungen 48,50 bzw. 52,54 angebracht. Die Bohrungen 48,50,52 und 54 erstrecken sich parallel zur Achse 32 des rohrförmigen Ofenkörpers 36 zwischen den Seitenflächen 42 und 44 bzw. 46 und 47, also längs des gesamten Ofens durch die Kontaktrippen 38 bzw. 40 hindurch. Es erfolgt eine Verminderung des Durchtrittsquerschnitts also auch längs des mittleren Bereichs des Ofenkörpers 36.

In jeder Kontaktrippe 38 und 40 sind weiterhin drei Querbohrungen 56,58,60 bzw. 62,64,66 vorgesehen, die sich zwischen den planen Flächen 12 und 14 erstrecken. Diese Querbohrungen 56,58,60 und 62,64,66 schneiden die Bohrungen 48,50 bzw. 52,54. In den Kontaktstücken 18 und 20 verlaufen längs der Achse 34 Schutzgaskanäle 68 bzw.70. Die Schutzgaskanäle 68 und 70 erstrecken sich bis in den Mittelteil 16 und schneiden die Bohrungen 48 und 50 bzw. 52 und 54 an, wie am besten aus Fig.1 ersichtlich ist. Wenn den Schutzgaskanälen 68,70 aus den geräteseitigen Kontakten Schutzgas zugeführt wird, wird dieses Schutzgas über die Bohrungen 48,50 und 52,54 sowie über die Querbohrungen 56,58,60 und 62,64,66 verteilt und umspült den Ofen von allen Seiten. Dadurch wird Luftzutritt zu dem Ofen und damit ein Verbrennen des Ofens bei den hohen Atomisierungstemperaturen verhindert.

Durch die Einschnürung wird auch der Durchtrittsquerschnitt für den elektrischen Strom im mittleren Bereich des Ofenkörpers 36 verringert und dadurch eine besonders gleichmäßige Temperaturverteilung erreicht.

Der Ofenkörper weist eine Eingabeöffnung 72 auf, durch welche eine zu analysierende Probe in den Ofen eingegeben werden kann. Die Achse 74 der Eingabeöffnung 72 ist senkrecht zu den Achsen 32 und 34 des Ofenkörpers 36 und der Kontaktstücke 18,20. Die Achse 74 der Eingabeöffnung 72 definiert zusammen mit der Achse 32 des Ofenkörpers 36 eine Längsmittelebene. Das ist eine Ebene senkrecht zur Papierebene in Fig.2 längs der Achse 32.

In der Bohrung 30 des Ofenkörpers 36 sitzt ein Innenkörper 76, der am besten in Fig.3 erkennbar ist. Der Innenkörper 76 ist zylinderschalenförmig, hat also etwa die Gestalt eines halben Hohlzylinders. Die Innenfläche des Innenkörpers 76 weist bei der Ausführung nach Fig.3 eine Folge von gewindeartigen Vorsprüngen 78 auf. Praktisch bilden die Vorsprünge 78 ein halbes Innengewinde. Diese Vorsprünge 78 hemmen das Auseinanderfließen einer durch die Eingabeöffnung eingebrachten flüssigen Probe in Längsrichtung des Innenkörpers 76. Die Herstellung der Vorsprünge 78 als Teil eines Innengewindes hat fertigungstechnische Gründe: Es kann dann zunächst in den rohrförmigen Innenkörper mittels eines Gewindeschneiders ein Gewinde geschnitten und der Gewindeschneider dann wieder herausgedreht werden. Anschließend wird, wie in Fig.1 dargestellt ist, die eine Hälfte des Innenkörpers mit zwei Längsbohrungen herausgebohrt. Der Innenkörper ist in dem Ofenkörper 36 nur über einen einzigen Steg 80 in der Mitte gehalten.

Von diesem Steg 80 sind anschließend bogenförmige Schlitze 81 zwischen Innenkörper 76 und Ofenkörper 36 herausgefräst, so daß der verbleibende Steg 80 sich über einen Winkel um die Achse 32 des Ofens erstreckt, der deutlich kleiner als 180° ist. Außerdem ist dieser verbleibende Steg 80 mit Bohrungen 83 parallel zur Achse 32 des Ofens versehen. Auf diese Weise wird verhindert, daß über den Steg 80 ein Stromfluß stattfindet, der zu einer unmittelbaren Erhitzung des Innenkörpers 76 im Bereich des Steges 80 führen könnte. Es wird ja angestrebt, daß derInnenkörper 76 nur indirekt durch die Strahlung der Innenwandung des Ofenkörpers 36 erhitzt wird, so daß die Probe mit Verzögerung erst dann atomisiert wird, wenn die Innenwandung des Ofenkörpers schon heiß ist.

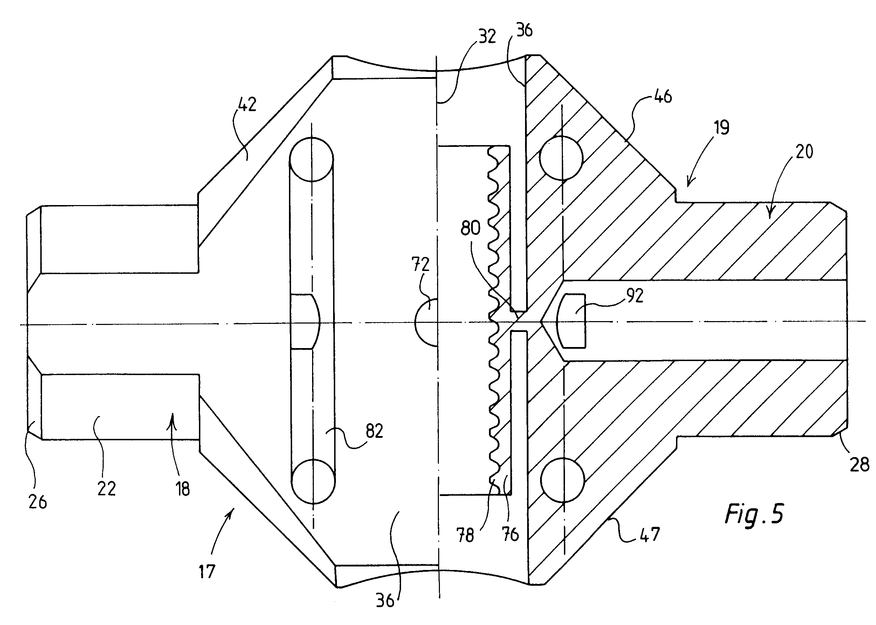

Der Ofen nach Fig.4 bis 6 ist ähnlich aufgebaut wie der Ofen nach Fig.1 bis 3. Entsprechende Teile sind mit den gleichen Bezugszeichen versehen wie dort und nicht noch einmal im einzelnen beschrieben.

Bei dem Ofen nach Fig.4 bis 6 erfolgt die Verminderung des Durchtrittsquerschnitts für Wärme und den elektrischen Strom längs des mittleren Bereichs des Ofenkörpers 36 durch Schlitze 82 und 86,88 in den planen Flächen 12 und 14 der Kontaktansätze 17 und 19. Die Schlitze sind parallel zur Achse 32 des Ofenkörpers 36 und enden im Abstand von den Seitenflächen 42,44 bzw. 46,47. Wie aus Fig.4 ersichtlich ist, werden die Schlitze, z.B. 86 und 88 von den Schutzgaskanälen, z.B. 70, angeschnitten. Das über die Schutzgaskanäle zuströmende Schutzgas tritt daher durch Öffnungen 90 und 92 in die Schlitze 86,88 und tritt durch diese Schlitze auf beiden Seiten und längs des Ofenkörpers 36 aus.

Der beschriebene Ofen wird mittels der Kontaktstücke 18,20 in einem Atomabsorptions - Spektrometer zwischen zwei Kontakten eingespannt. Das Meßlichtbündel des Atomabsorptions-Spektrometers tritt dabei längs der Achse 32 des Ofens durch den rohrförmigen Ofenteil, wobei es oberhalb des Innenteils 76 verläuft. Auf den Innenkörper 76 wird durch die Eingabeöffnung 72 eine Probe aufgebracht. Durch Hindurchleiten von elektrischem Strom durch den Ofen wird dieser auf eine sehr hohe Temperatur aufgeheizt. Der Innenkörper 76 wird dabei überwiegend indirekt durch Strahlung beheizt. Dabei wird die Probe atomisiert. Es bildet sich eine Atomwolke, in welcher die Elemente und auch ein gesuchtes Element in atomarem Zustand vorliegen. Aus der Absorption des von einer linienemittierenden Lichtquelle ausgehenden Meßlichtbündels in der Atomwolke kann auf die Menge des gesuchten Elements geschlossen werden. Die geräteseitigen Kontakte umschließen den Ofen weitgehend. Über die Kontakte wird durch die Schutzgaskanäle 68,70 Schutzgas zugeführt, damit kein Luftsauerstoff zu dem Ofen gelangen kann und der aus Graphit bestehende Ofen bei den hohen Temperaturen nicht verbrennt. Die beschriebenen Schlitze 82,86,88 und Öffnungen 90,92 verteilen dieses Schutzgas, so daß der Ofen auf allen Seiten von dem Schutzgas umspült wird. Die Stromzufuhr erfolgt quer zur Richtung des Meßlichtbündels und zur Achse 32 des Ofens. Durch die beschriebene Ausbildung wird eine optimal gleichmäßige Temperaturverteilung längs des Ofens erreicht.

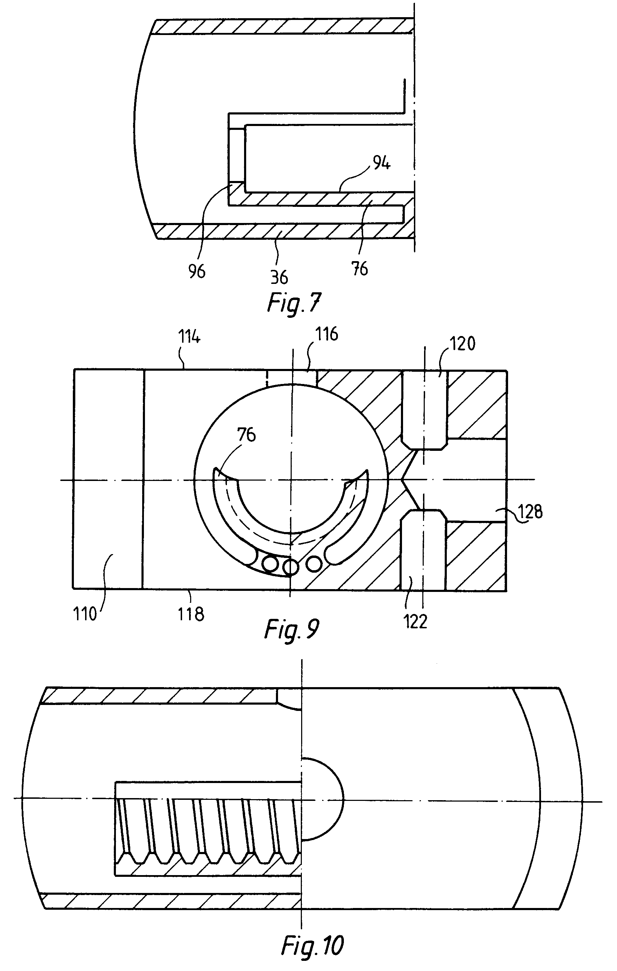

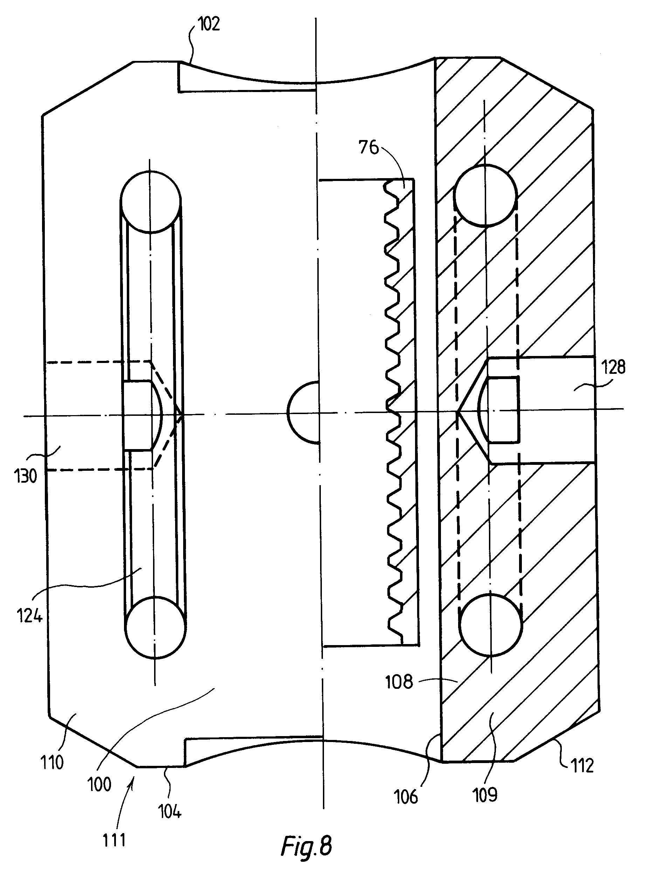

Bei der Ausführung nach Fig.7 ist statt der gewindeförmigen Innenfläche des Innenkörpers 76 eine glatt zylindrische Innenfläche 94 vorgesehen. An den Enden des Innenkörpers 76 sind nach innen vorstehende Randleisten 96 gebildet. Eine solche Ausbildung des Innenkörpers 76 erleichtert die Beschichtung mit Pyrokohlenstoff.

Fig.8 bis 10 zeigen eine Ausführungsform, bei welcher Kontaktansätze 109,111 keine zylindrischen Kontaktstücke enthalten. Der Ofen wird von einem Graphitkörper 100 von quaderartiger Grundform gebildet. In dem Graphitkörper 100 ist zwischen zwei Stirnflächen 102 und 104 eine Bohrung 106 angebracht. Der Teil des Graphitkörpers 100 zwischen den Stirnflächen 102 und 104 mit der Bohrung 106 bildet einen Ofenkörper 108. An gegenüberliegenden Längsseiten des Graphitkörpers 100 sind die Kontaktansätze 109,111 konisch abgedreht und bilden konische Kontaktflächen 110 und 112, welche an den geräteseitigen Kontakten anliegen. In der in Fig.9 oberen Fläche 114 des Graphitkörpers 100 ist eine Bohrung 116 als Eingabeöffung angebracht. Die Bohrung 116 mündet in der Bohrung 106. Die Achsen der Bohrungen 106 und 116 definieren wieder eine Längsmittelebene. In der Fläche 114 und der gegenüberliegenden Fläche 118 (unten in Fig.9) der Kontaktansätze 109,111 sind beiderseits des Ofenkörpers 108 Schlitze 120,122 bzw. 124 angebracht. Die Schlitze erstrecken sich jeweils über den mittleren Teil des Ofenkörpers 108. Wie aus Fig.8 ersichtlich ist, werden die Schlitze 120,122 von Schutzgaskanälen 128,130 angeschnitten. In dem Ofenkörper ist ein Innenkörper 76 gehalten. Die Ausbildung und Halterung des Innenkörpers 76 ist die gleiche wie bei der Ausführung nach Fig.4 bis 6 und deshalb nicht noch einmal im einzelnen beschrieben.

## Patentansprüche

1. Rohrförmiger Ofen für die elektrothermische Erhitzung von darin befindlichen Material, enthaltend
(a) einen rohrförmigen Ofenkörper (36,108),
(b) an dem Ofenkörper (36,108) auf gegenüberliegenden Längsseiten angebrachte Kontaktansätze(17, 19,109,111),
(c) an den Kontaktansätzen (17,19,109,111) angebrachte Kontaktflächen (26,28,110,112), über welche der Ofen zwischen geräteseitigen Kontakten gehalten wird,
(d) wobei die Kontaktansätze (17,19,109,111) zwischen den Kontaktflächen (26,28,110,112) und dem Ofenkörper (36,108) Bereiche von vermindertem Durchtrittsquerschnitt für Wärme und elektrischen Strom aufweisen,
(e) die Bereiche von vermindertem Durchtrittsquerschnitt der Kontaktansätze (17,19,109,111) von Einschnürungen gebildet sind, die sich im wesentlichen gleichmäßig längs des Ofenkörpers erstrecken, und
(f) Mittel zur Erzeugung einer den Ofenkörper (36, 108) umgebenden Schutzgasatmosphäre,
**dadurch gekennzeichnet, daß**
(g) die Mittel zur Erzeugung der den Ofenkörper (36, 108) umgebenden Schutzgasatmosphäre quer zur Ofenachse (32) verlaufende Bohrungen (68,70,128, 130) in den Kontaktansätzen (17,19,109,111) enthalten, die sich im wesentlichen gleichmäßig längs der gesamten Länge der Kontaktansätze erstrecken.

2. Rohrförmiger Ofen nach Anspruch 1, **dadurch gekennzeichnet,daß** jeder Kontaktansatz (17,19) eine die Einschnürung enthaltende Kontaktrippe (38,40) aufweist, an welche sich nach außen ein Kontaktstück (18,20) von zylindrischer Grundform anschließt.

3. Rohrförmiger Ofen nach Anspruch 2, **dadurch gekennzeichnet, daß** sich jedes Kontaktstück (18,20) an seinem Ende zur Bildung der Kontaktfläche (26,28) konisch verjüngt.

4. Rohrförmiger Ofen nach Anspruch 2 oder 3, **dadurch gekennzeichnet, daß** die Kontaktrippen (38,40) in Draufsicht auf die Fläche der Kontaktrippen trapezförmig sind, wobei die lange Parallelseite des Trapezes an den Ofenkörper (36) angrenzt und sich das Kontaktstück (18,20) jeweils an die schmale Parallelseite des Trapezes anschließt.

5. Rohrförmiger Ofen nach einem der Ansprüche 1 bis 4, **dadurch gekennzeichnet, daß** sich die Einschnürungen durchgehend längs eines mittleren Teils des Ofenkörpers (36) erstrecken.

6. Rohrförmiger Ofen nach Anspruch 5, **dadurch gekennzeichnet, daß** die Einschnürungen von parallel zur Ofenachse (32) verlaufenden und an den Enden geschlossenen Schlitzen (82,86,88,120,122,124) bestimmt sind, die mit dem zugehörigen Schutzgaskanal (68,70, 128,130) kommunizieren.

7. Rohrförmiger Ofen nach Anspruch 5, **dadurch gekennzeichnet, daß** sich die Schlitze (82,86,88,120,122, 124) durchgehend längs des mittleren Teils des Ofenkörpers (36) erstrecken.

8. Rohrförmiger Ofen nach Anspruch 5 oder 6, **dadurch gekennzeichnet, daß** jede Einschnürung von einem Paar aufeinander zulaufender Schlitze (86,88;122,124) bestimmt ist, die mit dem zugehörigen Schutzgaskanal (68,70,128,130) kommunizieren.

9. Rohrförmiger Ofen nach Anspruch 7, **dadurch gekennzeichnet, daß** die Schutzgaskanäle (68,70) von den Schlitzen (86,88) zur Bildung von Öffnungen (90,92) angeschnitten sind, durch welche Schutzgas austritt und den Ofen umspült.

10. Rohrförmiger Ofen nach einem der Ansprüche 1 bis 5, **dadurch gekennzeichnet, daß** die Einschnürungen von parallel zur Ofenachse verlaufenden Bohrungen (48,50; 52,54) bestimmt sind, die mit den zugehörigen Schutzgaskanälen (68,70) kommunizieren.

11. Rohrförmiger Ofen nach Anspruch 9, **dadurch gekennzeichnet, daß** jede Einschnürung von einem Paar benachbarter Bohrungen (48,50;52,54) bestimmt ist, die mit dem zugehörigen Schutzgaskanal (68,70) kommunizieren.

12. Rohrförmiger Ofen nach Anspruch 9 oder 10, **dadurch gekennzeichnet, daß** sich jede Bohrung (48,50,52,54) im wesentlichen durchgehend über die gesamte Länge des Ofenkörpers (36) erstreckt.

13. Rohrförmiger Ofen nach Anspruch 10 oder 11, **dadurch gekennzeichnet, daß** in den Kontaktrippen (38,40) zusätzliche Querbohrungen (56,58,60;62,64,66) senkrecht zur Fläche der Kontaktrippen (38,40) angebracht sind.

14. Rohrförmiger Ofen nach Anspruch 12, **dadurch gekennzeichnet, dass**
(a) die Schutzgaskanäle (68,70) in den Kontaktrippen (38,40) von den parallel zur Ofenachse (32) verlaufenden Bohrungen (48,50;52,54) angeschnitten sind und
(b) die parallel zur Ofenachse (32) verlaufenden Bohrungen (48,50;52,54) von den zusätzlichen Querbohrungen (56,58,60;62,64,66) in den Kontaktrippen (38,40) angeschnitten sind.

## Claims

1. Tubular furnace for the electrothermal heating of the material contained therein, comprising
(a) a tubular furnace body (36,108),
(b) contact projections (17,19,109,111) attached to the furnace body (36,108) on opposite longitudinal sides,
(c) contact surfaces (26,28,110,112) attached to the contact projections (17,19,109,111), through which contact surfaces the furnace is held between apparatus side contacts,
(d) the contact projections (17,19,109,111) having areas of reduced passage cross section for heat and electrical current between the contact surfaces (26,28,110,112) and the furnace body (36,108),
(e) the areas of reduced passage cross section of the contact projections (17,19,109,111) are formed by reduced-thickness portions extending generally uniformly along the furnace body, and
(f) means for generating an inert gas atmosphere surrounding the furnace body (36,108),
**characterized in that**
(g) the means for generating the inert gas atomosphere surrounding the furnace body (36,108) contain bores (68,70,128,130) extending transversally to the furnace axis (32) in the contact projections (17,19,109,111), which extend generally uniformly along the whole length of the contact projections.

2. Tubular furnace as set forth in claim 1, **characterized in that** each contact projection (17,19) has a contact rib (38,40) containing the reduced-thickness portion and communicating outwardly with a contact element (18,20) of generally cylindrical shape.

3. Tubular furnace as set forth in claim 2, **characterized in that** each contact element (18,20) is tapered at its end to form the contact surface (26,28).

4. Tubular furnace as set forth in claim 2 or 3, **characterized in that** the contact ribs (38,40) are trapezoidal in plan view on the surface of the contact ribs, the long parallel side of each trapezoid communicating with the furnace body (36), and the respective contact element (18,20) communicating with the small parallel side of the trapezoid.

5. Tubular furnace as set forth in one of claims 1 to 4, **characterized in that** the reduced-thickness portions extend continuously along a central portion of the furnace body (36).

6. Tubular furnace as set forth in claim 5, **characterized in that** the reduced-thickness portions are defined by slots (82,86,88, 120,122,124) extending parallelly to the furnace axis (32) and closed at their ends, which slots communicate with the associated inert gas passages (68,70,128,130).

7. Tubular furnace as set forth in claim 5, **characterized in that** the slots (82,86,88,120,122,124) extend continously along the central portion of the furnace body (36).

8. Tubular furnace as set forth in claim 5 or 6, **characterized in that** each reduced-thickness portion is defined by a pair of slots (86,88;122,124) extending towards each other and communicating with the associated inert gas passage (68,70,128,130).

9. Tubular furnace as set forth in claim 7, **characterized in that** the inert gas passages (68,70) are intersected by the slots (86,88) to form openings (90,92), through which inert gas emerges and flows around the furnace.

10. Tubular furnace as set forth in one of claims 1 to 5, **characterized in that** the reduced-thickness portions are defined by bores (48,50;52,54) extending parallely to the furnace axis and communicating with the associated inert gas passages (68,70).

11. Tubular furnace as set forth in claim 9, **characterized in that** each reduced-thickness portion is defined by a pair of adjacent bores (48,50;52,54) communicating with the associated inert gas passage (68,70).

12. Tubular furnace as set forth in claim 9 or 10, **characterized in that** each bore (48,50,52,54) extends generally continously over the whole length of the furnace body (36).

13. Tubular furnace body as set forth in claim 10 or 11, **characterized in that** additional tranverse bores (56,58,60;62,64,66) are provided in the contact ribs (38,40) perpendicular to the surface of the contact ribs (38,40).

14. Tubular furnace as set forth in claim 12, **characterized in that**
(a) the inert gas passages (68,70) in the contact ribs (38,40) are intersected by bores (48,50;52,54) extending parallelly to the furnace axis (32), and
(b) the bores (48,50;52,54) extending parallelly to the furnace axis (32) are intersected by the additional transverse bores (56,58,60; 62,64,66) in the contact ribs.

## Revendications

1. Four tubulaire destiné à l'échauffement électrothermique de matières se trouvant dans celui-ci, comprenant
(a) un corps de four tubulaire (36,108),
(b) des jeux de contacts (17,19,109,111) montés sur des côtés longitudinaux opposés du corps de four (36,108),
(c) des surfaces de contact (26,28,110,112) montées sur les jeux de contacts (17,19,109,111), surfaces par lesquelles le four est tenu entre des contacts sur le côté de l'appareil,
(d) les jeux de contacts (17,19,109,111) présentant des zones de coupe transversale de passage réduites pour la chaleur et le courant électrique entre les surfaces de contacts (26,28,110,112) et le corps de four (36,108),
(e) les zones de coupe transversale de passage réduites des jeux de contacts (17,19,109,111) sont formées par des strictions s'étendant en générale régulièrement le long du corps de four, et
(f) des moyens destinés à engendrer une atmosphère de gaz protecteur entourant le corps de four (36,108),
**caractérisé par le fait que**
(g) les moyens destinés à engendrer une atomosphère de gaz protecteur entourant le corps de four (36,108) comprennent des alésages (68,70,128,130) dans les jeux de contacts (17,19,109,111), alésages qui s'étendent transversalement à l'axe du four (130) et en générale régulièrement le long de toute la longueur des jeux de contacts.

2. Four tubulaire selon la revendication 1, **caractérisé par le fait que** chaque jeu de contacts (17,19) présente une nervure de contact (38,40) comprenant la striction, à laquelle fait suite vers l'extérieur une pièce de contact (18,20) d'une forme de base cylindrique.

3. Four tubulaire selon la revendication 2, **caractérisé par le fait que** chaque pièce de contact (18,20) se rétrécit coniquement à son extrémité de sorte à former la surface de contact (26,28).

4. Four tubulaire selon la revendication 2 ou 3, **caractérisé par le fait que** les nervures de contact (38,40) sont trapézoidales dans la vue de dessus sur la surface des nervures de contact, le long côté parallèle du trapèze étant adjacent au corps de four (36) et la pièce de contact (18,20) faisant respectivement suite au petit côté parallèle du trapèze.

5. Four tubulaire selon l'une des revendications 1 à 4, **caractérisé par le fait que** les strictions s'étendant continuellement le long d'une partie centrale du corps de four (36).

6. Four tubulaire selon la revendication 5, **caractérisé par le fait que** les strictions sont déterminées par des fentes (82,86,88,120,122,124) parallèles à l'axe de four (32) et fermées aux extrémités, et communiquant avec le canal de gaz protecteur associé (68,70,128,130).

7. Four tubulaire selon la revendication 5, **caractérisé par le fait que** les fentes (82,86,88,120,122,124) s'étendent continuellement le long de la partie centrale du corps de four (36).

8. Four tubulaire selon la revendication 5 ou 6, **caractérisé par le fait que** chaque striction est déterminée par une paire de fentes (86,88;122,124) s'étendant l'une vers l'autre et communiquant avec le canal de gaz protecteur associé (68,70,128,130).

9. Four tubulaire selon la revendication 7, **caractérisé par le fait que** les canaux de gaz protecteur (68,70) sont entamés par les fentes (86,88) de sorte à former des ouvertures (90,92) par lesquelles sort le gaz protecteur et s'écoule autour du four.

10. Four tubulaire selon l'une des revendications 1 à 5, **caractérisé par le fait que** les strictions sont déterminées par les alésages (48,50;52,54) parallèles à l'axe de four et communiquant avec les canaux de gaz protecteur (68,70) associés.

11. Four tubulaire selon la revendication 9, **caractérisé par le fait que** chaque striction est déterminée par une paire d'alésages adjacents (48,50;52,54) communiquant avec le canal de gaz protecteur associé (68,70).

12. Four tubulaire selon la revendication 9 ou 10, **caractérisé par le fait que** chaque alésage (48,50,52,54) s'étend généralement continuellement sur toute la longueur du corps de four (36).

13. Four tubulaire selon la revendication 10 ou 11, **caractérisé par le fait que** des alésages transversaux supplémentaires (56,58,60;62,64,66) sont montés dans les nervures de contact (38,40) perpendiculairement à la surface des nervures de contact (38,40).

14. Four tubulaire selon la revendication 12, **caractérisé par le fait que**
(a) les canaux de gaz protecteur (68,70) sont entamés dans les nervures de contact (38,40) par des alésages (48,50;52,54) parallèles à l'axe de four (32), et
(b) les alésages (48,50;52,54) parallèles aux axes de four (32) sont entamés par les alésages transversaux supplémentaires (56,58,60;62,64,66) dans les nervures de contact (38,40).
